# EUROPÄISCHE PATENTSCHRIFT

(11) **EP 1 167 779 B1**
(45) Veröffentlichungstag und Bekanntmachung des Hinweises auf die Patenterteilung: **16.11.2005**
(21) Anmeldenummer: 01115073.7
(22) Anmeldetag: 21.06.2001
(51) Int. Cl.: F16B 15/00

(54) **Hammerplatten-Winkelelement**
Angle bended beating plate-element
Element d'outil à battage angulaire

(30) Priorität: 28.06.2000 DE 20011318 U
(43) Veröffentlichungstag der Anmeldung: 02.01.2002
(73) Patentinhaber: Timco Europe AG, 7224 Putz (CH)
(72) Erfinder: Wieland, Heinz, 7304 Maienfeld (CH)
(74) Vertreter: Blumbach - Zinngrebe

(56) Entgegenhaltungen:
- GB-A- 1 295 047
- GB-A- 2 250 795
- US-A- 2 396 030
- US-A- 3 305 252
- US-A- 4 297 048
- US-A- 4 653 242

## Beschreibung

Die Erfindung bezieht sich auf ein Hammerplatten-Winkelelement nach dem Oberbegriff des Anspruch 1. Ein solches Hammerplatten-Winkelelement ist aus der US-A-4,297,048 bekannt.

Hammerplatten sind aus der GB-A 1 295 047 bekannt, und zwar als ebene Gebilde und als Winkelelement mit zwei Schenkel. Die Hammerplatte besteht aus einer Blech-Metallplatte mit aus dieser gestanzten Zungen, die hakenförmig gebogen sind, wobei die Zungenspitzen in ihrer Ausstanzungsstelle in Plattenebene sitzen und sich der jeweilige Hakenknick oberhalb der Ebene der Hammerplatte befindet. Die Blechzunge bildet zwischen Spitze und Hakenknick einen Nagel, der mit einem Hammer in Holz eingetrieben werden kann. Bei den winkelförmigen Hammerplatten sind beide Schenkel jeweils mit Nagelausbildungen versehen, die in Richtung der Winkelaußenseite getrieben werden können. Damit können aufeinanderliegende quer zueinander angeordnete Hölzer miteinander verbunden werden, jedoch unterliegen die Nägel des unteren Holzes der Gefahr des Herausgezogenwerdens, wenn der obere Holzbalken in seiner Längsrichtung verschoben wird.

Die US-A-4,297,048 zeigt eine Fülle von Hammerplatten-Winkelelementen, darunter auch solche mit drei Schenkeln in unterschiedlichen Plattenebenen, jedoch keine Z-Form.

Die US-A-4,653,242 zeigt Nagelplatten mit von der jeweiligen Plattenebene abstehenden Nagelausbildungen, die insgesamt mittels Presse in die dafür vorgesehenen Balken eingetrieben werden müssen. Es werden U-förmige Winkelelemente offenbart.

Die GB-A-2 250 795 zeigt ein Hammerplatten-Winkelelement mit drei jeweils senkrecht aufeinander stehenden Plattenebenen, von denen eine relativ große Platte mit Nagelausbildungen versehen ist, während die anderen relativ kleineren Platten entweder frei oder mit Bohrungen versehen sind. Die Z-Form ist nicht vorgesehen.

Der Erfindung liegt die Aufgabe zugrunde, die Anwendung der Hammerplatte auf dem Gebiet der Baukonstruktion zu erweitern. Die gestellte Aufgabe wird durch Winkelelemente gelöst, wie sie in den Ansprüchen umrissen werden.

Die neuen Winkelelemente können zum Verbinden und Befestigen von Hölzern oder von Bauplatten dienen. Möglich ist auch die lokale Verstärkung von Holz, insbesondere wenn dieses als Biegebalken verwendet wird.

Das neue Hammerplatten-Winkelement weist drei Plattenebenen auf, wobei jede Plattenebene den Schenkel eines Winkels bildet. Wenigstens ein Schenkel ist mit Nagelausbildungen versehen. Die Plattenebenen oder Schenkel schließen in Form eines Z aneinander an.

Bei dem im Querschnitt Z-förmigen Hammerplatten-Winkelelement ergibt sich eine große Anwendungsbreite. Aufeinanderliegend sich kreuzende Hölzer können sicher miteinander verbunden werden, ohne dass die Gefahr des Herausziehens der Nägel bei Schublasten auf dem obenauf liegenden Holz auftritt. Schwachstellen an Balken oder Trägern können verstärkt werden. Bauplatten können an Decken angehängt werden.

Die Erfindung wird anhand der Zeichnungen beschrieben.
Dabei zeigt:
- Fig. 1: die Befestigung zweier gekreuzter Balken,
- Fig. 2: die Verstärkung eines Balkens,
- Fig. 3: die Befestigung einer Platte an einem Holzbalken,
- Fig. 4: eine Abwandlung zu Fig. 3,

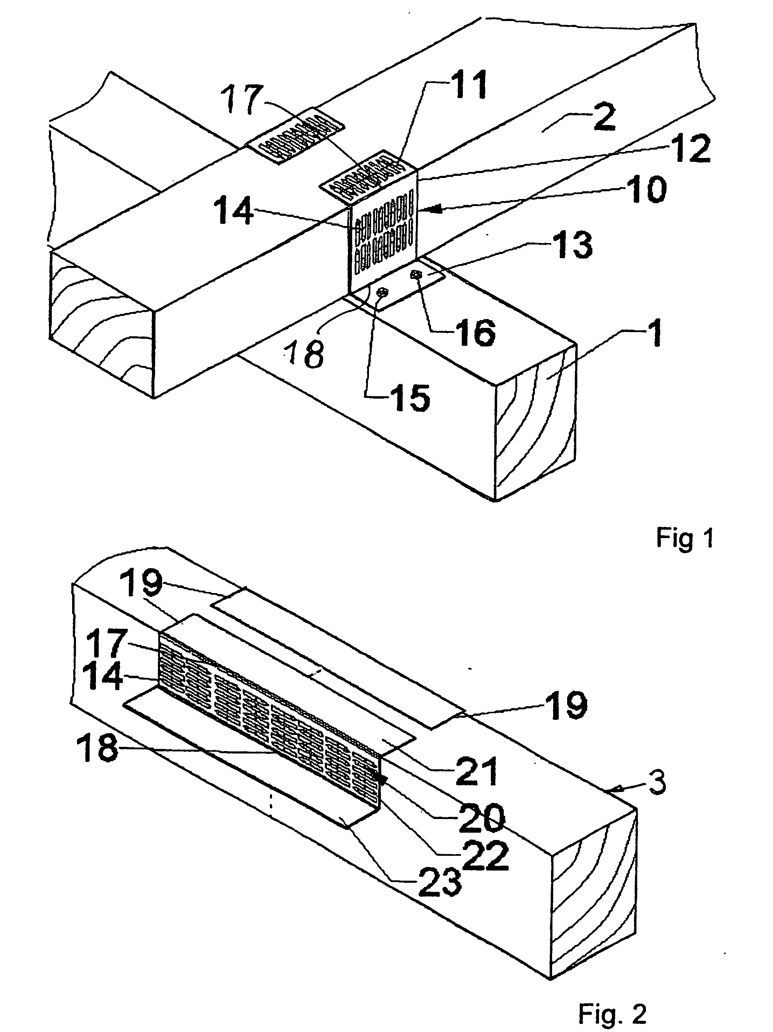

Fig. 1 zeigt zwei sich überkreuzende Hölzer (Balken oder Latten) 1, 2, die über ein Z-förmiges Winkelelement 10 miteinander verbunden sind. Das Winkelelement 10 weist drei Schenkel oder Platten 11, 12 und 13 auf, wobei der erste und dritte Schenkel 11, 13 auf dem zweiten oder mittleren Schenkel 12 senkrecht stehen und mit diesem über Biegekanten 17, 18 verbunden sind. Der mittlere Schenkel 12 weist zwei Reihen hakenförmiger Nagelausbildungen 14 auf, die zungenartig aus dem Blechmaterial des Elements 10 ausgestanzt und zu den Nägeln 14 gebogen worden sind. Der Schenkel 11 kann ebenfalls eine Reihe solcher Nagelausbildungen 14 aufweisen. Der Schenkel 13 hingegen ist mit Lochungen 15 versehen, die zur Aufnahme von Schraubbolzen 16 dienen, mit denen das Element 10 an dem Holz 1 festgeschraubt wird. Bemerkenswert ist die Eintreibrichtung der Nägel 14, nämlich zur Winkelinnenseite, gebildet von den Schenkeln 11 und 12. Dies ermöglicht die Befestigung direkt oberhalb des Holzes 1, und nicht seitlich versetzt.

Bei sich überkreuzenden Hölzern 1, 2 tritt in Erstreckungsrichtung des Holzes 2 häufig Schub auf, der von den Nägeln 14 der Hammerplatte aufgenommen und auf die Schenkel oder Platten 11, 12 übertragen wird. Die Nägel 14 der Hammerplatte sind für diese Quer-Belastungsart gut geeignet. Der Schub führt jedoch auch zu einer Kipplast auf dem Schenkel 13, d.h. eine Kante wird angehoben und die andere Kante niedergedrückt. Zur Seite der angehobenen Kante tritt demnach Zuglast auf. Diese Zuglast wird durch einen oder mehrere Schraubbolzen 16 aufgefangen, wobei bemerkenswert ist, dass eine derartige Zuglast von Schraubbolzen sehr gut auf Holz übertragen werden kann, während Nägel für diese Längs-Belastungsart weniger gut geeignet sind und deshalb am Schenkel 13 fehlen.

Fig. 2 zeigt die örtliche Verstärkung eines Holzbalkens hinsichtlich Querkräften und seines Biegemoments. Es wird ein längliches Z-förmiges Element 20 mit Platten oder Schenkeln 21, 22, 23 verwendet. Die Nägel 14 sind in mehreren senkrechten Reihen auf der mittleren Platte 22 angeordnet. Zwischen den Schenkeln oder Platten 21, 22, 23 gibt es Biegekanten 17, 18, die parallel zueinander verlaufen. Neben den Biegekanten 17, 18 verlaufen jeweils ungeschwächte Blechstreifen (wie im Falle des Elements 10). Die Stanzkanten 19 sind wesentlich kürzer als die Biegekanten 17, 18.

Es sei angenommen, dass der Balken 3 einer örtlich erhöhten Quer- und Biegelast unterliege. In Folge der guten Ankopplung durch die Nägel 14 der Platte 22 wird diese Last auf die Platte 22 übertragen. Die höchsten Belastungen treten dann im Bereich der Biegekanten 17, 18 auf, die jedoch durch die Flanschplatten 21 und 23 verstärkt werden, so dass Überlasten, die zum Einreißen der Platte 22 oder Verwölbungen führen könnten, vermieden werden.

Das Element 20 kann dahingehend abgewandelt werden, dass auch die Flanschplatte 21 mit Nagelausbildungen 14 versehen wird. Dies ergibt eine noch festere Verankerung des Hammerplatten-Winkelelements am Balken 3. Bemerkenswert ist wiederum die Eintreibrichtung der Nägel 14 zur Winkelinnenseite (im Gegensatz zur Eintreibrichtung bei den Winkelelementen der GB-A 1 295 047).

Zwei (oder vier) Winkelelemente der Ausbildung 20 können zur Verbindung sich stoßender Balken (in Fig. 2 angedeutet) verwendet werden. Diese Elemente weisen an allen Schenkeln 21, 22 ins Winkelinnere gerichtete Nagelausbildungen 14 auf und haben den Vorteil, dass sie für verschiedene Holzabniessungen verwendet werden können, d.h. nicht an die Breite (und Höhe) des Holzbalkens streng angepaßt sein müssen, wie im Falle eines U-förmigen Elements.

Die Platten brauchen nicht die dargestellten Größenverhältnisse aufzuweisen. Insbesondere ist es möglich, die Platte 22 wesentlich breiter zu machen, um eine größere Höhe des Balkens 3 zu überdecken. Auch kann die Breite der Flanschplatte 23 stark reduziert werden, oder ganz entfallen, wenn durch entsprechende Dickenbemessung der Platte 22 dafür gesorgt wird, dass diese nicht am Rande einreißt oder sich wölbt.

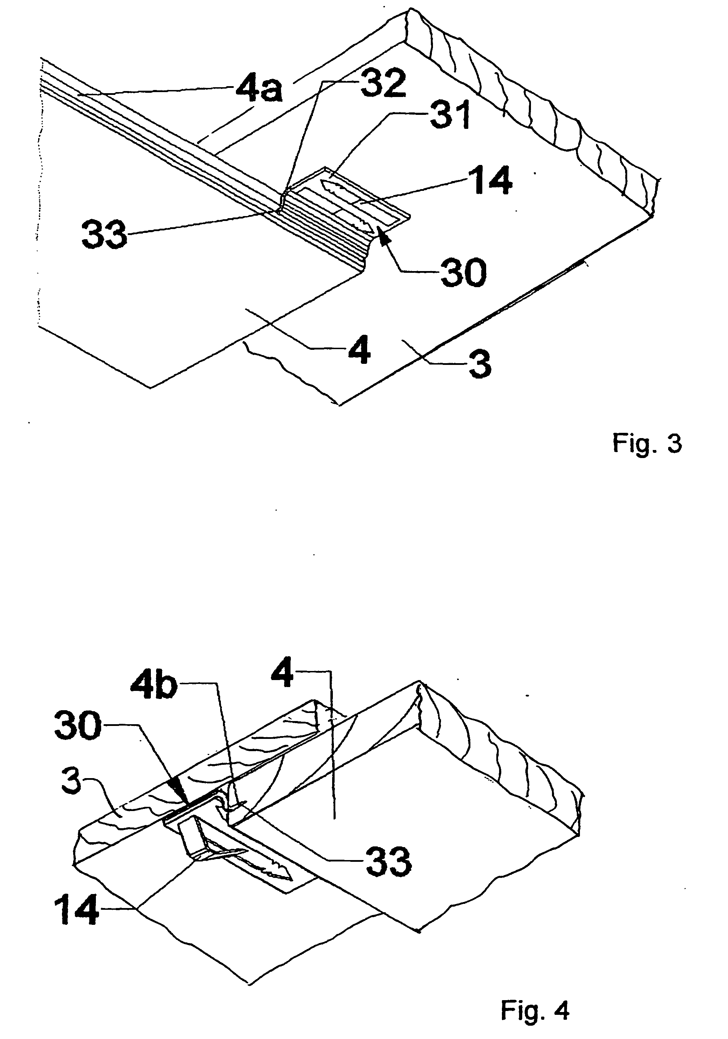

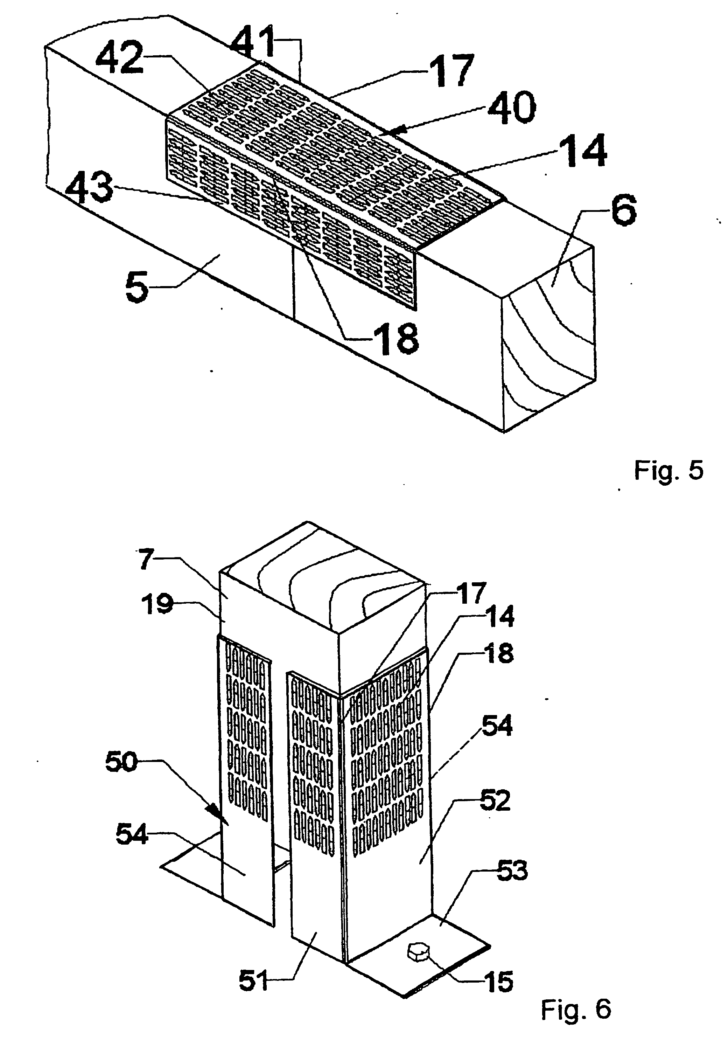

Fig. 3 zeigt die Anwendung eines Z-förmigen Winkelelements 30 zur Befestigung einer Nutplatte 4 an einem Balken 3. Das Z-förmige Winkelelement 30 weist Schenkel 31, 32, 33 auf. Die hakenförmigen Nagelausbildungen 14 sind in dem ersten Schenkel 31 vorgesehen, um das Element an der Unterseite des Balkens 3 zu befestigen. Der mittlere Schenkel 32 erreicht eine Breite, die in etwa der halben Dicke der Platte 4 entspricht. Der dritte Schenkel 33 greift in die Nut 4a der Nutplatte 4 ein. Dort, wo die Platte eingreift, wird der obere Rand der Nutplatte 4 ein wenig ausgespart, damit die Platten 4 dicht an dicht montiert werden können, ohne dass Lücken infolge der Dicke der Winkelelemente entstehen.

Fig. 4 zeigt eine Abwandlung der Befestigung der Platte 4. Die Flanschplatte 33 läuft spitz zu und kann zusätzlich gezähnt sein, um in die Platte 4 hineingetrieben zu werden, in der sich dementsprechend ein Schlitz 4b bildet.

Die Hammerplatten werden für mittlere Belastungen aus Stahlblech von 1,5 mm Dicke hergestellt. Die Nägel weisen vorzugsweise eine Breite von 5 mm und eine Zungenlänge von 35 mm auf. Die Nägel sind hinter ihrer Spitze eingekerbt und leicht gewölbt ausgebildet, um das Widerstandsmoment gegen Biegung zu erhöhen. Bevorzugte Abmessungen der mit Nägel besetzten Platten betragen 100 auf 80 mm, 100 auf 160 mm, 100 auf 240 mm und 100 auf 320 mm.

Bei den vorgeschlagenen Hammerplatten-Winkelelementen wird der Umstand ausgenutzt, dass die Nagelausbildungen bei Hammerplatten nach unterschiedlichen Richtungen und damit auch in den von einem Winkel umgrenzten Raum schauen können, da sie einzeln mit dem Hammer in Holz eingetrieben werden können. Dies steht im Gegensatz zu den sogenannten Nagelplatten, bei denen die Nägel insgesamt fest an der Platte sitzen und deshalb mit einer Presse gesetzt werden müssen. Die neu vorgeschlagenen Hammerplatten-Winkelelemente können somit vom Handwerker oder Heimwerker ohne großen gerätetechnischen Aufwand montiert werden und bieten vielerlei Verbindungsmöglichkeiten zwischen Holzteilen sowie zwischen Holz und Beton.

## Patentansprüche

1. Hammerplatten-Winkelelement (10, 20, 30) zur Verbindung oder Verstärkung von Hölzern,
mit einem in drei Plattenebenen gebogenen Blech, das einen ersten (11, 21, 31), einen zweiten (12, 22, 32) und einen dritten (13, 23, 33) Schenkel aufweist, von denen wenigstens ein Schenkel mit Nagelausbildungen (14) versehen ist,
**dadurch gekennzeichnet, dass** die Plattenebenen oder Schenkel in Form eines Z aneinander anschließen.

2. Hammerplatten-Winkelelement nach Anspruch 1,
**dadurch gekennzeichnet, dass** die Winkel zwischen benachbarten Plattenebenen oder Schenkeln je 90° betragen.

3. Hammerplatten-Winkelelement nach Anspruch 1 oder 2,
**dadurch gekennzeichnet, dass** der zweite-mittlere-Schenkel (12, 22) mit Nagelausbildungen (14) versehen ist.

4. Hammerplatten-Winkelelement nach Anspruch 3,
**dadurch gekennzeichnet, dass** der erste Schenkel (11, 21) mit Nagelausbildungen (14) versehen ist, wobei der erste und zweite Schenkel einen Winkelraum zueinander einschließen, in welchen die Spitzen der Nagelausbildungen (14) hineingerichtet sind.

5. Hammerplatten-Winkelelement
nach einem der Ansprüche 1 bis 4,
**dadurch gekennzeichnet, dass** der dritte Schenkel (13) mit Lochungen (15) zum Durchtritt von jeweiligen Schraubbolzen (16) versehen ist.

6. Hammerplatten-Winkelelement
nach einem der Ansprüche 1 bis 5,
**dadurch gekennzeichnet, dass** die Schenkel durch Stanzkanten (19) eines Blechzuschnitts sowie durch Biegekanten (17, 18) begrenzt werden, wobei die Biegekanten wesentlich länger als die Stanzkanten des
Blechs sind.

7. Hammerplatten-Winkelelement nach Anspruch 6,
**dadurch gekennzeichnet, dass** die Biegekanten (17, 18) parallel zueinander angeordnet sind.

8. Hammerplatten-Winkelelement
nach einem der Ansprüche 1 bis 7,
**dadurch gekennzeichnet, dass** der zweite-mittlere-Schenkel (12, 22) eine Platte bildet, die größer ist als die jeweilige Platte der benachbarten Schenkel.

9. Hammerplatten-Winkelelement nach einem der Ansprüche 1 bis 5,
**dadurch gekennzeichnet, dass** der erste Schenkel (31) wesentlich größer ist als der zweite und dritte Schenkel (32, 33) und mit Nagelausbildungen (14) versehen ist, wobei der dritte Schenkel (33) zum Eingriff in eine Nut (4a) oder Schlitz (4b) einer zu befestigenden Platte (4) ausgebildet ist.

10. Hammerplatten-Winkelelement
nach einem der Ansprüche 1 bis 5,
**dadurch gekennzeichnet, dass** das Blech eine Blechstärke von 1,5 mm aufweist.

11. Hammerplatten-Winkelelement
nach einem der Ansprüche 1 bis 5,
**dadurch gekennzeichnet, dass** die mit Nagelausbildungen besetzten Platten eine Abmessung von 100 mm auf nx80 mm aufweisen, wobei n = 1, 2, 3 oder 4 ist.

## Claims

1. Hammer plate angle element (10, 20, 30) for joining or reinforcing wooden members,
with a metal sheet bent into three plate planes, said sheet having a first (11, 21, 31), a second (12, 22, 32) and a third (13, 23, 33) leg, of which at least one leg is provided with nail formations (14),
**characterised in that** the plate planes or legs are connected to each other to form a Z.

2. Hammer plate angle element according to claim 1, **characterised in that** the angles between adjoining plate planes or legs are 90° in each case.

3. Hammer plate angle element according to claim 1 or 2, **characterised in that** the second, middle leg (12, 22) is provided with nail formations (14).

4. Hammer plate angle element according to claim 3, **characterised in that** the first leg (11, 21) is provided with nail formations (14) wherein the first and second leg enclose an angle space relatively to each other, into which the tips of the nail formations (14) point.

5. Hammer plate angle element
according to one of the claims 1 to 4,
**characterised in that** the third leg (13) is provided with holes (15) for the respective screw bolts (16) to pass through.

6. Hammer plate angle element
according to one of the claims 1 to 5,
**characterised in that**
the legs are defined by stamped edges (19) of a sheet metal cutting and by bent edges (17, 18) wherein the bent edges are considerably longer than the stamped edges of the sheet metal.

7. Hammer plate angle element according to claim 5,
**characterised in that**
the bent edges (17, 18) are arranged parallel to each other.

8. Hammer plate angle element
according to one of the claims 1 to 7,
**characterised in that**
the second, middle leg (12, 22) forms a plate which is larger than the respective plate of the adjoining legs.

9. Hammer plate angle element according to one of the claims 1 to 5,
**characterised in that**
the first leg (31) is considerably larger than the second and third leg (32, 33) and is provided with nail formations (14) wherein the third leg (33) is constructed so as to engage in a groove (4a) or slot (4b) of a plate (4) to be secured.

10. Hammer plate angle element
according to one of the claims 1 to 5,
**characterised in that**
the sheet metal has a sheet thickness of 1.5 mm.

11. Hammer plate angle element
according to one of the claims 1 to 5,
**characterised in that** the size of the plates fitted with nail formations is 100 mm by n x 80 mm wherein n = 1, 2, 3 or 4.

## Revendications

1. Élément d'angle en plaque à crampons (10, 20, 30) destiné à relier ou à renforcer des bois et comprenant une tôle pliée en trois plans de plaque qui comporte une première aile (11, 21, 31), une deuxième aile (12, 22, 32) et une troisième aile (13, 23, 33) parmi lesquelles au moins une aile est munie de structures en forme de clous (14),
**caractérisé en ce que** les plans de plaque ou ailes se raccordent les uns aux autres en forme de Z.

2. Élément d'angle en plaque à crampons selon la revendication 1,
**caractérisé en ce que** les angles situés entre des plans de plaque ou des ailes voisins font chacun 90°.

3. Élément d'angle en plaque à crampons selon la revendication 1 ou 2,
**caractérisé en ce que** la deuxième aile (médiane) (12, 22) est munie de structures en forme de clous (14).

4. Élément d'angle en plaque à crampons selon la revendication 3,
**caractérisé en ce que** la première aile (11, 21) est munie de structures en forme de clous (14), la première et la deuxième aile définissant conjointement un espace angulaire vers l'intérieur duquel les pointes des structures en forme de clous (14) sont dirigées.

5. Élément d'angle en plaque à crampons selon l'une des revendications 1 à 4,
**caractérisé en ce que** la troisième aile (13) est munie de perforations (15) destinées au passage de boulons filetés (16) respectifs.

6. Élément d'angle en plaque à crampons selon l'une des revendications 1 à 5,
**caractérisé en ce que** les ailes sont délimitées par les bords découpés (19) d'une coupe de tôle ainsi que par des bords pliés (17, 18), les bords pliés étant sensiblement plus longs que les bords découpés de la tôle.

7. Élément d'angle en plaque à crampons selon la revendication 6,
**caractérisé en ce que** les bords pliés (17, 18) sont parallèles entre eux.

8. Élément d'angle en plaque à crampons selon l'une des revendications 1 à 7,
**caractérisé en ce que** la deuxième aile (médiane) (12, 22) forme un panneau qui est plus grand que chacun des panneaux des ailes voisines.

9. Élément d'angle en plaque à crampons selon l'une des revendications 1 à 5,
**caractérisé en ce que** la première aile (31) est sensiblement plus grande que la deuxième et la troisième aile (32, 33) et **en ce qu'**elle est munie de structures en forme de clous (14), la troisième aile (33) étant conçue pour s'engager dans une rainure (4a) ou une fente (4b) d'un panneau à fixer (4).

10. Élément d'angle en plaque à crampons selon l'une des revendications 1 à 5,
**caractérisé en ce que** la tôle a une épaisseur de 1,5 mm.

11. Élément d'angle en plaque à crampons selon l'une des revendications 1 à 5,
**caractérisé en ce que** les panneaux pourvus de structures en forme de clous ont des dimensions de 100 mm sur n fois 80 mm, n étant égal à 1, 2, 3 ou 4.
